# EUROPEAN PATENT APPLICATION

(11) **EP 4 749 802 A1**
(43) Date of publication of application: **27.05.2026**
(21) Application number: 23952871.4
(22) Date of filing: 17.11.2023
(51) Int. Cl.: H01M 50/503, H01M 50/528, H01M 10/04

(54) **CURRENT COLLECTOR DISC PROCESSING METHOD, CURRENT COLLECTOR DISC, BATTERY CELL AND ELECTRICAL APPARATUS**

(30) Priority: 19.09.2023 CN 202311208692
(71) Applicant: Contemporary Amperex Technology Co., Limited, Ningde, Fujian 352100 (CN)
(72) Inventor: WU, Kai, Ningde, Fujian 352100 (CN); LIU, Ning, Ningde, Fujian 352100 (CN); BAI, Qinglin, Ningde, Fujian 352100 (CN)
(74) Representative: Ziebig Hengelhaupt Intellectual Property Attorneys Patentanwaltskanzlei PartGmbB
(86) International application number: PCT/CN2023/132448
(87) International publication number: WO 2025/060225

(57) **Abstract**

The present application discloses a current collector disc processing method, a current collector disc, a battery cell, and an electrical apparatus. The current collector disc processing method includes: a punching step of providing a first sheet stock; a stacking step of providing a second sheet stock and stacking the second sheet stock with the first sheet stock; a welding step of welding the first sheet stock and the second sheet stock in a welding region; and a cutting step of obtaining the current collector disc. According to the current collector disc processing method, the current collector disc, the battery cell, and the electrical apparatus provided in the present application, the current collector disc is obtained by sequentially undergoing the punching step, the stacking step, the welding step, and the cutting step, and does not require positioning structures to be arranged on an annular sheet and a connecting disc, which is conducive to simplifying the structure of the current collector disc, improving the positional accuracy of the annular sheet and the connecting disc in the current collector disc, and simplifying the production and assembly process of the current collector disc.

## Description

The present application claims priority to Chinese Patent Application No. 202311208692.4, filed with the China National Intellectual Property Administration on September 19, 2023 and entitled "CURRENT COLLECTOR DISC PROCESSING METHOD, CURRENT COLLECTOR DISC, BATTERY CELL, AND ELECTRICAL APPARATUS", which is incorporated herein by reference in its entirety.

### TECHNICAL FIELD

The present application belongs to the technical field of batteries, and more particularly, relates to a current collector disc processing method, a current collector disc, a battery cell, and an electrical apparatus.

### BACKGROUND

In the related art, a cylindrical battery cell includes an electrode assembly, a negative electrode current collector disc, and a housing. A negative electrode tab of the electrode assembly is usually made of copper foil, while the housing is usually made of a steel shell. The negative electrode current collector disc includes a copper sheet welded to the negative electrode tab and a steel sheet welded to the housing, and the copper sheet and the steel sheet are welded and in conduction. In order to ensure the assembly accuracy of a current collector disc, a plurality of positioning structures need to be arranged on the copper sheet and the steel sheet respectively to control the welding alignment of the copper sheet and the steel sheet, the alignment of the copper sheet and the negative electrode tab, and the alignment of the steel sheet and the housing. This will lead to a complex structure of the current collector disc, and complex processing and assembly, consequently affecting the efficiency of the processing and assembly of the current collector disc.

The statement here merely provides background information related to the present application, and does not necessarily constitute the prior art.

### SUMMARY OF THE INVENTION

The purpose of embodiments of the present application is to provide a current collector disc processing method, a current collector disc, a battery cell, and an electrical apparatus, including, but not limited to, solving the technical problems of complex processing and assembly of a current collector disc in related applications.

In the embodiments of the present application, the technical solutions as follows are used.

In a first aspect, a current collector disc processing method is provided, and includes the following steps:
a punching step of providing a first sheet stock, where the first sheet stock includes a pre-punched region, the pre-punched region is divided into a hole forming region and a welding region surrounding the hole forming region, and a first hole for a tab to be placed in cooperation is formed in the hole forming region;
a stacking step of providing a second sheet stock, and stacking the second sheet stock with the first sheet stock so that the second sheet stock covers the pre-punched region;
a welding step of welding the first sheet stock and the second sheet stock in the welding region; and
a cutting step of cutting the first sheet stock and the second sheet stock along an edge of the pre-punched region to obtain a current collector disc;
where in the current collector disc, a part formed by cutting the first sheet stock is an annular sheet, the annular sheet is configured to connect to a housing, a part formed by cutting the second sheet stock is a connecting disc, the connecting disc is configured to connect to the tab, and a position where the connecting disc and the annular sheet are connected by welding forms a welding mark region.

In the current collector disc processing method provided in the embodiment of the present application, the first sheet stock and the second sheet stock are subjected to the punching step, the stacking step, the welding step, and the cutting step to obtain the current collector disc. Since the annular sheet and the connecting disc in the current collector disc have been welded together before cutting, cutting edges of the annular sheet and the connecting disc can be kept aligned, so that the current collector disc can be aligned with both the tab and the housing during assembly. Compared with a method of first obtaining the annular sheet and the connecting disc through cutting and then positioning and welding the annular sheet and the connecting disc, the current collector disc in the present application does not require a positioning structure to be arranged on the annular sheet and the connecting disc, which is conducive to simplifying a structure of the current collector disc, improves positional accuracy of the annular sheet and the connecting disc in the current collector disc, simplifies the production and assembly process of the current collector disc, and helps to improve production and assembly efficiency. Moreover, the processing method of the present application can improve the symmetry of the current collector disc, and avoid an influence on welding accuracy of the current collector disc with the tab and the housing caused by an alignment difference between the annular sheet and the connecting disc in the current collector disc.

In one embodiment, in the punching step, a plurality of pre-punched regions are sequentially arranged in a length direction of the first sheet stock, and the first hole is formed in the hole forming region of each pre-punched region.

By sequentially arranging the plurality of pre-punched regions in the length direction of the first sheet stock and forming the first hole, welding and cutting positions can be controlled to be arranged sequentially, thereby facilitating processing the annular sheet of a plurality of current collector discs.

In one embodiment, in the stacking step, a length direction of the second sheet stock is kept the same as the length direction of the first sheet stock, so that the second sheet stock covers each pre-punched region.

By covering the plurality of pre-punched regions with the second sheet stock, it is possible to facilitate cutting to obtain the connecting disc of the plurality of current collector discs, thereby improving the processing efficiency of the current collector disc.

In one embodiment, after the stacking step, the method further includes: compressing the first sheet stock and the second sheet stock, so that the first sheet stock and the second sheet stock remain flat at a position corresponding to the pre-punched region.

By compressing the first sheet stock and the second sheet stock after stacking the first sheet stock and the second sheet stock, the first sheet stock and the second sheet stock can be kept flat and in close contact with each other, so as to facilitate welding and cutting the first sheet stock and the second sheet stock.

In one embodiment, in the welding step, before welding the first sheet stock and the second sheet stock, the method further includes:
recognizing a position of the first hole, and determining, according to the position of the first hole, a welding position of the first sheet stock and the second sheet stock in the welding region.

By determining the welding position according to the position of the first hole, it is possible to ensure that the welding position in each current collector disc is consistent with the position of the first hole thereof, thereby avoiding an influence on consistency of relative positions of the welding mark region and the first hole in the current collector disc caused by positional deviation of the first sheet stock and the second sheet stock.

In one embodiment, the cutting step further includes: forming a second hole in the second sheet stock, and arranging the second hole coaxially with the first hole.

By adopting the second hole, circulation of an electrolyte and the like can be facilitated.

In one embodiment, in the cutting step, before cutting the first sheet stock and the second sheet stock, the method further includes:
recognizing a position of the first hole, and determining, according to the position of the first hole, a position of an edge of the pre-punched region and a position in the second sheet stock for forming the second hole.

By determining, according to the position of the first hole, the position of the second hole and a cutting position corresponding to a periphery of the pre-punched region, the first hole and the second hole in the current collector disc can be kept consistent with a relative position of a periphery of the current collector disc, thereby improving the consistency and symmetry of the current collector disc.

In one embodiment, in the welding step, the first sheet stock and the second sheet stock are welded by using one welding method of laser welding, penetration welding, resistance welding, thermal compounding or friction welding.

By adopting the above welding method, the first sheet stock and the second sheet stock can be welded together, ensuring that the first sheet stock and the second sheet stock are firmly welded.

In some embodiments, after the cutting step, the method further includes:
removing burr on an edge of the current collector disc.

By adopting the above technical means, the edge of the current collector disc can be kept smooth, which is beneficial to improving the welding quality during the assembly of the current collector disc.

In one embodiment, a circumference of the welding mark region is coaxially arranged with the first hole; and/or a peripheral edge of the current collector disc is coaxially arranged with the first hole.

By adopting the above technical means, the symmetry of the welding mark region on the current collector disc can be improved. After the current collector disc is welded to the tab and the housing, the resistance distribution of the first sheet stock and the second sheet stock in each direction can be uniform; the first hole is coaxial with the periphery of the current collector disc, which can improve the symmetry of the current collector disc and facilitate alignment welding of the current collector disc with the tab and the housing.

In one embodiment, the welding mark region includes a plurality of welding sections.

By adopting the above technical means, it is possible to avoid unevenness of both surfaces of the current collector disc after welding caused by high heat input during welding of the first sheet stock and the second sheet stock.

In one embodiment, the plurality of welding sections are arranged in an annular array; and/or,
the welding section is arc-shaped, and a central angle, corresponding to the first hole, of the welding section is 30 degrees to 120 degrees; and/or,
a central angle, corresponding to the first hole, of a gap between every two adjacent welding sections is 5 degrees to 60 degrees; and/or,
a ratio of a width of the welding section to a width of the annular sheet is 0.2 to 0.9.

By adopting the above technical means, the symmetry of the welding mark region can be improved, and the both surfaces of the current collector disc can be conveniently controlled to remain flat after welding; a length of each welding section can be guaranteed to facilitate reducing the number of welding times, thereby ensuring welding efficiency, dispersing heat input during welding, and ensuring the flatness of the current collector disc; spacing between adjacent welding sections can be controlled to ensure the resistance between the annular sheet and the connecting disc, and prevent the current collector disc from deforming after welding; controlling the width of the welding section can improve stability of connection between the annular sheet and the connecting disc, and is conducive to reducing resistance.

In one embodiment, the first sheet stock is a strip material; and/or the second sheet stock is a strip material.

Using the strip materials is beneficial to continuous production of the current collector disc.

In one embodiment, a material of the first sheet stock is the same as that of the housing; and/or,
a material of the second sheet stock is the same as that of the tab.

By adopting the first sheet stock having the same material as the housing, the annular sheet and the housing can be made of the same material, thereby facilitating welding the housing and the annular sheet and improves the stability of welding the annular sheet and the housing; by adopting the second sheet stock having the same material as the tab, the connecting disc and the tab can be made of the same material, thereby facilitating welding the tab and the connecting disc and improving the stability of welding the connecting disc and the tab.

In a second aspect, an embodiment of the present application further provides a current collector disc, including an annular sheet configured to connect to a housing and a connecting disc configured to connect to a tab, where a welding mark region is formed between the annular sheet and the connecting disc, and a first hole is formed in a middle of the annular sheet; by cutting a first sheet stock and a second sheet stock which are stacked and connected by welding, the annular sheet is formed by a part cut from the first sheet stock, the connecting disc is formed by a part cut from the second sheet stock, the welding mark region is formed by a welding portion of the first sheet stock and the second sheet stock, and peripheral edges of the annular sheet and the connecting disc are aligned.

By adopting the above technical means, the peripheral edges of the annular sheet and the connecting disc in the current collector disc can be aligned, so that the structure of the current collector disc can be simplified, the assembly and alignment of the current collector disc can be facilitated, and the production and assembly efficiency of the current collector disc can be improved.

In one embodiment, a second hole for circulation of an electrolyte is formed in the connecting disc, and an area of the second hole is smaller than that of the first hole.

By adopting the above technical means, a certain region can be reserved for welding a tab in the connecting disc corresponding to a position inside the first hole, so as to facilitate welding of the connecting disc and the tab.

In one embodiment, a material of the annular sheet is the same as that of the housing; and/or,
a material of the connecting disc is the same as that of the tab.

By using the annular sheet made of the same material as the housing, welding of the housing and the annular sheet can be facilitated, and stability of the welding between the annular sheet and the housing can be improved; by using the connecting disc made of the same material as the tab, welding of the tab and the connecting disc can be facilitated, and stability of the welding between the connecting disc and the tab can be improved.

In a third aspect, an embodiment of the present application further provides a battery cell, including an electrode assembly and a housing, where the electrode assembly is provided with a positive electrode tab and a negative electrode tab, and further including the current collector disc described in any of the above embodiments, where the negative electrode tab or the positive electrode tab is placed in the first hole and connected to the connecting disc by welding, and the housing is connected to the annular sheet by welding.

By adopting the above technical means, the symmetry of the current collector disc is better, which helps to improve the consistency of the battery cell, so that assembly of the current collector disc is more convenient, which is conducive to improving the production efficiency of the battery cell.

In a fourth aspect, an embodiment of the present application further provides an electrical apparatus, including the battery cell described in any of the above embodiments.

By adopting the above technical means, it is helpful to improve the stability of operation of the electrical apparatus and reduce the costs and production efficiency of the electrical apparatus.

### BRIEF DESCRIPTION OF DRAWINGS

In order to explain the technical solutions in the embodiments of the present application more clearly, the accompanying drawings needed in the description of the embodiments or demonstrative technologies will be briefly introduced below. Obviously, the accompanying drawings in the following descriptions are only some embodiments of the present application. For a person of ordinary skill in the art, other accompanying drawings can be obtained according to these accompanying drawings without creative work.
FIG. 1 is a schematic structural view of a vehicle according to some embodiments of the present application;
FIG. 2 is a schematic view of an exploded structure of a battery according to some embodiments of the present application;
FIG. 3 is an exploded view of a battery cell according to an embodiment of the present application;
FIG. 4 is a schematic view of a current collector disc processing method according to an embodiment of the present application;
FIG. 5 is a top view of a pre-punched region in a first sheet stock in an embodiment of the present application;
FIG. 6 is a top view of the first sheet stock obtained after a punching step in an embodiment of the present application;
FIG. 7 is a top view of the first sheet stock and a second sheet stock obtained after a welding step in an embodiment of the present application;
FIG. 8 is an enlarged view of an inside of the pre-punched region in FIG. 7;
FIG. 9 is a top view of a current collector disc according to an embodiment of the present application; and
FIG. 10 is a schematic view of a three-dimensional structure of the current collector disc according to an embodiment of the present application.

Reference Numerals in the Drawings:
1000-vehicle, 100-battery, 200-controller, 300-motor;
10-current collector disc; 101-welding mark region; 1011-welding section; 11-first sheet stock; 110-annular sheet; 111-pre-punched region; 1111-welding region; 1112-hole forming region; 112-first hole; 12-second sheet stock; 120-connecting disc; 121-second hole;
20-battery cell; 21-housing; 22-electrode assembly; 221-negative electrode tab; 222-positive electrode tab; 23-top cover;
30-box, 31-first portion, 32-second portion.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF

### DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meaning of the above terms in embodiments the present application may be understood on a case-by-case basis.

At present, from the development of the market situation, the application of batteries is becoming increasingly more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of batteries, the market demand thereof is also constantly expanding.

In the related art, a cylindrical battery cell includes an electrode assembly, a current collector disc, and a housing. The electrode assembly is provided with a negative electrode tab and a positive electrode tab. The negative electrode tab is made of copper foil, and the housing is made of a steel shell. The current collector disc includes a copper sheet and a steel sheet. The copper sheet is welded to the negative electrode tab, and the steel sheet is welded to the housing, thereby achieving connection and conduction of the negative electrode tab and the housing. When assembling the battery cell, it is necessary to first align the copper sheet and the steel sheet and weld them to fix them, then weld the copper sheet to the negative electrode tab, and weld the steel sheet to the housing. When welding the copper sheet and the steel sheet, due to an alignment error of the copper sheet and the steel sheet, when the current collector disc is welded to the housing and the negative electrode tab, alignment of the copper sheet and the negative electrode tab may be affected, and alignment of the steel sheet and the housing may be affected, consequently affecting the assembly consistency of the current collector disc.

To this end, it is usually necessary to arrange positioning structures on both the copper sheet and the steel sheet. For example, a protrusion is arranged on the copper sheet and a groove is formed in the steel sheet. The protrusion and the groove cooperate to control alignment of the copper sheet and the steel sheet. Arranging the positioning structures on the steel sheet and the copper sheet will increase the complexity of the current collector disc structure, and the copper sheet and the steel sheet need to be controlled to be aligned during assembly, which will increase the processing and assembly complexity of the current collector disc and affect the processing and assembly efficiency of the current collector disc.

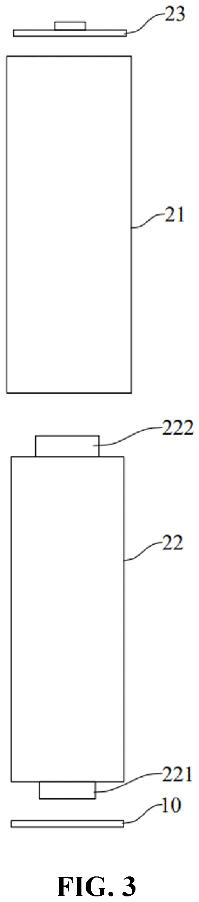

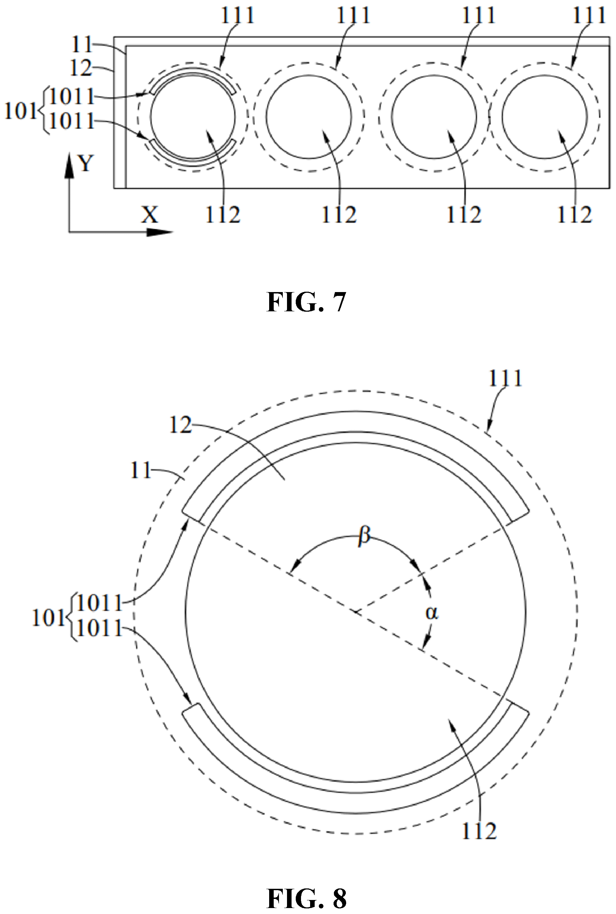

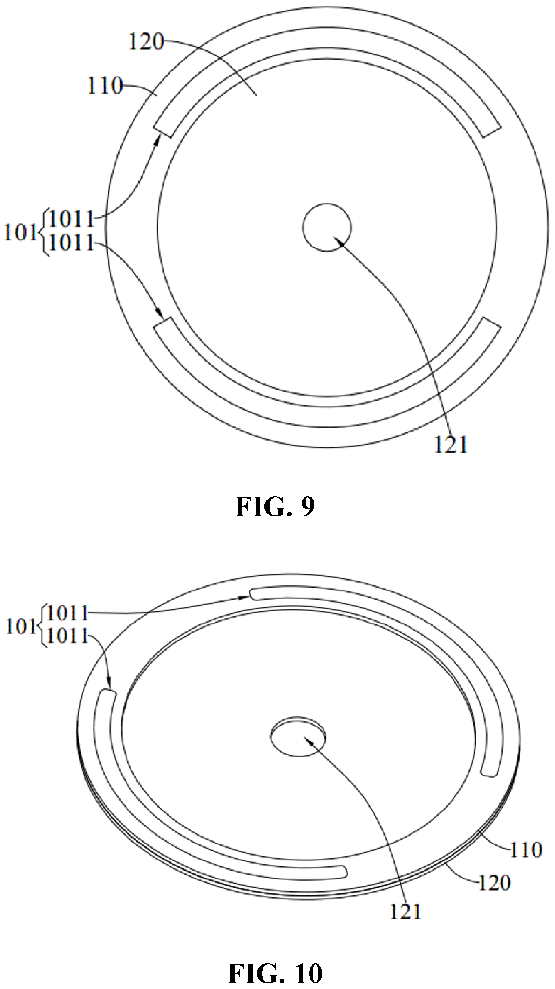

Based on the above considerations, some embodiments of the present application provide a current collector disc processing method, referring to FIG. 3 to FIG. 9, the current collector disc processing method includes the steps: a punching step S10, a stacking step S20, a welding step S30, and a cutting step S40, by first welding a first sheet stock 11 and a second sheet stock 12 and then cutting them to obtain a current collector disc 10, since the first sheet stock 11 and the second sheet stock 12 have been welded during cutting, so that positions of an annular sheet 110 and a connecting disc 120 formed during cutting remain fixed; and edges of the annular sheet 110 and the connecting disc 120 are formed by cutting, so that the edges of the annular sheet 110 and the connecting disc 120 in the current collector disc 10 can be aligned, in this way, there is no need to strictly control the alignment accuracy of the first sheet stock 11 and the second sheet stock 12 during welding, which lowers the requirement for welding alignment, simplifies the structure of the current collector disc 10, and is conducive to improving the alignment accuracy of the current collector disc 10, thereby improving the processing efficiency and assembly efficiency of the current collector disc 10, and improving the assembly consistency of the current collector disc 10 in a battery cell 20.

The current collector disc disclosed in the embodiment of the present application may be an electrical apparatus for using a battery cell, a battery or a battery pack, and the current collector disc may be used to electrically connect a negative electrode tab and a housing in the battery cell. The electrical apparatus can be, but not limited to, a vehicle, a portable device, a laptop, a ship, a spacecraft, an electric toy, a power tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy may include fixed or mobile electric toys, such as a game machine, an electric vehicle toy, an electric ship toy, an electric airplane toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

For the convenience of description in the following embodiments, an electrical apparatus according to an embodiment of the present application being a vehicle 1000 is taken as an example for description.

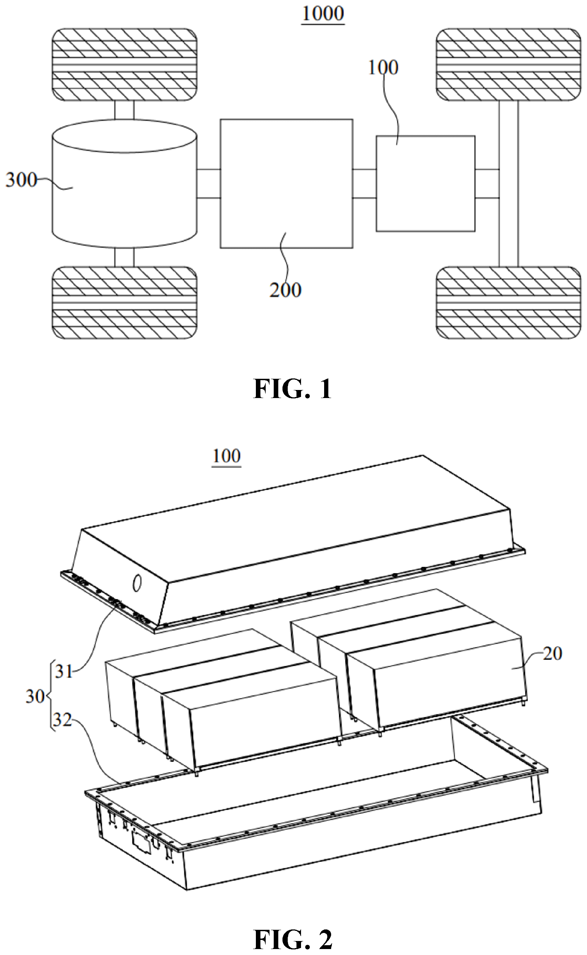

Referring to FIG. 1, FIG. 1 is a schematic structural view of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to meet a demand for working power during starting, navigation, and driving of the vehicle 1000.

In some embodiments of the present application, the battery 100 not only may serve as the operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is a schematic exploded view of a battery 100 according to an embodiment of the present application. The battery 100 includes a box 30 and a battery cell 20, where the battery cell 20 is accommodated within the box 30. The current collector disc processing method is a process method for producing the current collector disc 10 in the battery cell 20.

The box 30 is configured to provide an accommodating space for the battery cell 20, and the box 30 may be of a variety of structures. In some embodiments, the box 30 may include a first portion 31 and a second portion 32, where the first portion 31 and the second portion 32 cover each other, and the first portion 31 and the second portion 32 together define the accommodating space for accommodating the battery cell 20. The second portion 32 may be of a hollow structure with an opening in one end, and the first portion 31 may be of a plate-shaped structure, where the first portion 31 covers the opening side of the second portion 32 such that the first portion 31 and the second portion 32 together define the accommodating space. The first portion 31 and the second portion 32 may each be of a hollow structure with an opening in one side, where the opening side of the first portion 31 covers the opening side of the second portion 32. Certainly, the box 30 formed by the first portion 31 and the second portion 32 may be of a variety of shapes, such as a cylinder, a cuboid, or the like.

In some embodiments, the box 30 may be a part of a chassis structure of the vehicle 1000. For example, a part of the box 30 may become at least a part of a floor of the vehicle 1000, or a part of the box 30 may become at least a part of a cross beam and a longitudinal beam of the vehicle 1000.

Of course, in some embodiments, the battery 100 may not include the box 30, but a plurality of battery cells 20 may be electrically connected and formed into an entirety through a necessary fixing structure and are then assembled into the vehicle 1000.

In the battery 100, there may be a plurality of battery cells 20, and the plurality of battery cells 20 may be connected in series or parallel or parallel-series, where the parallel-series connection means that the plurality of battery cells 20 are connected in both series and parallel. The plurality of battery cells 20 may be directly connected together in series or parallel or parallel-series, and then the entirety composed of the plurality of battery cells 20 is accommodated within the box 30. Certainly, the battery 100 may also be a battery module composed of a plurality of battery cells 20 connected in series or parallel or parallel-series, and then a plurality of battery modules are connected in series or parallel or parallel-series to form an entirety which is accommodated in the box 30. The battery 100 may further include other functional components. For example, the battery 100 may further include a busbar for electrically connecting the plurality of battery cells 20.

Each battery cell 20 may be a secondary battery or a primary battery, where the secondary battery refers to a battery cell 20 that can continue to be used by activating an active material by charging after the battery cell 20 is discharged, and the primary battery refers to a battery cell 20 that cannot continue to be used by activating the active material by charging after electric energy of the battery cell 20 is used up. The battery cell 20 may also be a lithium-ion battery, a sodium-ion battery, a sodium-lithium-ion battery, a lithium-metal battery, a sodium-metal battery, a lithium-sulfur battery, a magnesium-ion battery, a nickel-metal hydride battery, a nickel-cadmium battery, a lead storage battery, and the like, but is not limited to this. The battery cell 20 may be a cylindrical battery cell, a prismatic battery cell, a pouch battery cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

For the convenience of description, a current collector disc processing method according to an embodiment of the present application is described.

Referring to FIG. 3 to FIG. 10, the present application provides a current collector disc processing method, which includes the steps:
a punching step S10 of providing a first sheet stock 11, where the first sheet stock 11 includes a pre-punched region 111, the pre-punched region 111 is divided into a hole forming region 1112 and a welding region 1111, the welding region 1111 surrounds the hole forming region 1112, and a first hole 112 for a tab to be placed in cooperation is formed in the hole forming region 1112;
a stacking step S20 of providing a second sheet stock 12, and stacking the second sheet stock 12 with the first sheet stock 11 so that the second sheet stock 12 covers the pre-punched region 111;
a welding step S30 of welding the first sheet stock 11 and the second sheet stock 12 in the welding region 1111; and
a cutting step S40 of cutting the first sheet stock 11 and the second sheet stock 12 along an edge of the pre-punched region 111 to obtain a current collector disc 10;
where in the current collector disc 10, a part formed by cutting the first sheet stock 11 is an annular sheet 110, the annular sheet 110 is configured to connect to a housing 21, a part formed by cutting the second sheet stock 12 is a connecting disc 120, the connecting disc 120 is configured to connect to the tab, and a position where the annular sheet 110 and the connecting disc 120 are connected by welding forms a welding mark region 101.

It should be noted that the housing 21 can be made of one of the metals or alloys such as steel, nickel, aluminum or copper; the tab can be made of another of the metals or alloys such as steel, nickel, aluminum or copper. The current collector disc 10 can be but is not limited to a negative electrode current collector disc, and the first hole 112 can be but is not limited to being provided for the negative electrode tab 221 to be placed in cooperation. A position of the connecting disc 120 in the current collector disc 10 corresponding to the first hole 112 is connected to the negative electrode tab 221 by welding, thereby achieving connection and conduction between the current collector disc 10 and the negative electrode tab 221.

The first sheet stock 11 can be a plate material or a strip material, etc. When the first sheet stock 11 is a plate material, a width of the plate material is greater than or equal to an outer diameter of the current collector disc 10, and a length of the plate material is greater than the outer diameter of the current collector disc 10; when the first sheet stock 11 is a strip material, a width of the strip material is greater than or equal to the outer diameter of the current collector disc 10, and a length of the strip material is greater than the outer diameter of the current collector disc 10. The second sheet stock 12 can be a plate material or a strip material, etc. When the second sheet stock 12 is a plate material, a width of the plate material is greater than or equal to the outer diameter of the current collector disc 10, and a length of the plate material is greater than the outer diameter of the current collector disc 10; when the second sheet stock 12 is a strip material, a width of the strip material is greater than or equal to the outer diameter of the current collector disc 10, and a length of the strip material is greater than the outer diameter of the current collector disc 10.

The hole forming region 1112 is a region corresponding to the first hole 112, and a shape of the hole forming region 1112 is the same as that of the first hole 112. The welding region 1111 is a region, on the first sheet stock 11, that surrounds the hole forming region 1112 and corresponds to one annular sheet 110. A shape of the welding region 1111 is the same as that of the annular sheet 110. The pre-punched region 111 is a region corresponding to cutting of one annular sheet 110 on the first sheet stock 11, that is, the pre-punched region 111 is a circular region with an outer diameter equal to the outer diameter of the current collector disc 10. After the hole forming region 1112 in the pre-punched region 111 is cut off, the remaining part is namely the welding region 1111. Areas of the first sheet stock 11 and the second sheet stock 12 are both greater than an area of the pre-punched region 111.

The first hole 112 can be a circular hole, a square hole or a regular polygonal hole. The first hole 112 is larger than a cross section of the tab. When the battery cell 20 is assembled, the tab can be inserted into the first hole 112 to facilitate welding an end surface of the tab to the connecting disc 120. The first hole 112 can be formed by punching, laser cutting, or the like. In one embodiment, the first hole 112 is a circular hole, which has high symmetry.

In the stacking step S20, the second sheet stock 12 can be stacked on any side of the first sheet stock 11, the second sheet stock 12 covers the pre-punched region 111, and a projection of the second sheet stock 12 on the first sheet stock 11 can completely cover the pre-punched region 111. The width of the second sheet stock 12 may be greater than or equal to the width of the first sheet stock 11, so that alignment during stacking can be facilitated.

In the welding step S30, planes close to each other of the first sheet stock 11 and the second sheet stock 12 can be welded together by welding methods such as laser welding, penetration welding, resistance welding, thermal compounding or friction welding. Here, the first sheet stock 11 and the second sheet stock 12 are made of different materials. In the welding step S30, different materials are welded together. Since contact surfaces of the first sheet stock 11 and the second sheet stock 12 are parallel, a contact area is large, welding is easier and the consistency of the welding quality is better.

The welding mark region 101 is a planar region where the first sheet stock 11 and the second sheet stock 12 are welded and fused together in the welding step S30, that is, a planar region where the first sheet stock 11 is welded to the second sheet stock 12 on one side thereof corresponding to an inside of one welding region 1111 and close to the second sheet stock 12. The welding mark region 101 is smaller than or equal to a side of the annular sheet 110 close to the connecting disc 120. When an area of the welding mark region 101 is equal to an area of the side of the annular sheet 110 close to the connecting disc 120, an entire plane of the annular sheet 110 close to the connecting disc 120 is welded to the connecting disc 120; when the area of the welding mark region 101 is smaller than the area of the side of the annular sheet 110 close to the connecting disc 120, a part of the side of the annular sheet 110 close to the connecting disc 120 is not welded to the connecting disc 120.

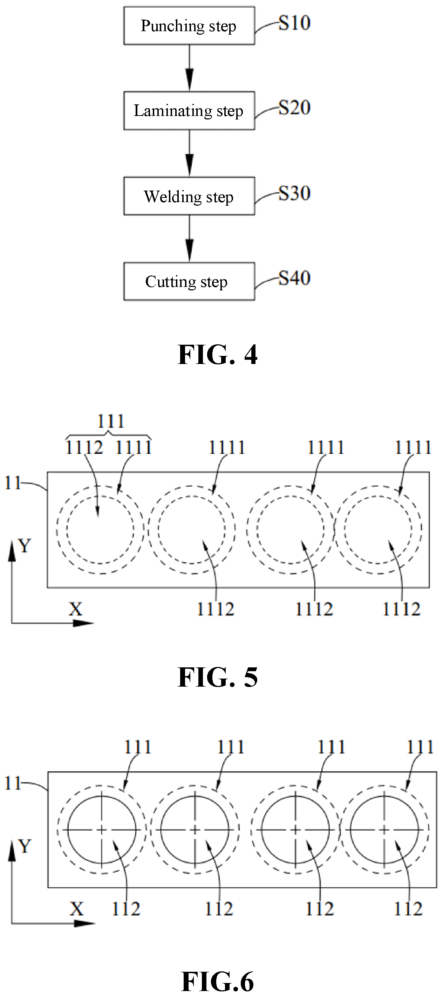

In the cutting step S40, when cutting along the pre-punched region 111 is performed, it can be, but is not limited to, punching, laser cutting, or other cutting methods, and the cutting method can be the same as or different from the cutting method of the first hole 112. During cutting, the first sheet stock 11 and the second sheet stock 12 are cut through in a thickness direction of the first sheet stock 11 (a direction perpendicular to an XY axis plane in FIG. 5 and FIG. 6), so that a position of the first sheet stock 11 corresponding to the pre-punched region 111 is cut off from the first sheet stock 11 to form the annular sheet 110, and a position of the second sheet stock 12 corresponding to the pre-punched region 111 is cut off from the second sheet stock 12 to form the connecting disc 120. Since the welding mark region 101 is located in the pre-punched region 111, the annular sheet 110 and the connecting disc 120 are welded together to form the current collector disc 10.

In the current collector disc processing method provided in the embodiment of the present application, the first sheet stock 11 and the second sheet stock 12 are subjected to the punching step S10, the stacking step S20, the welding step S30, and the cutting step S40 to obtain the current collector disc 10. Since the annular sheet 110 and the connecting disc 120 in the current collector disc 10 have been welded together before cutting, cutting edges of the annular sheet 110 and the connecting disc 120 can be kept aligned, so that the current collector disc 10 can be aligned with both the tab and the housing 21 during assembly. Compared with a processing method of first obtaining the annular sheet and the connecting disc through cutting and then positioning and welding the annular sheet and the connecting disc, and respectively arranging the positioning structure on the copper sheet and the steel sheet of the current collector disc 10 to control alignment and welding of the copper sheet and the steel sheet, the current collector disc 10 in the present application does not require a positioning structure to be arranged on the annular sheet 110 and the connecting disc 120, which is conducive to simplifying a structure of the current collector disc 10, improving positional accuracy of the annular sheet 110 and the connecting disc 120 in the current collector disc 10, simplifying the production and assembly process of the current collector disc 10, and improving production and assembly efficiency. Moreover, the processing method of the present application can improve the symmetry of the current collector disc 10, and avoid an influence on welding accuracy of the current collector disc 10 with the tab and the housing 21 caused by an alignment difference between the annular sheet 110 and the connecting disc 120 in the current collector disc 10.

Referring to FIG. 3 to FIG. 7, in one embodiment, in the punching step S10, a plurality of pre-punched regions 111 are sequentially arranged in a length direction X of the first sheet stock 11, and the first hole 112 is formed in the hole forming region 1112 of each pre-punched region 111.

Distances between adjacent pre-punched regions 111 in the plurality of pre-punched regions 111 may be equal or unequal, and two adjacent pre-punched regions 111 may be tangent to each other or spaced apart. When the width of the first sheet stock 11 is roughly equal to the outer diameter of the current collector disc 10, the pre-punched region 111 on the first sheet stock 11 is arranged in the length direction X of the first sheet stock 11. This can facilitate the control of the cutting position of the first hole 112 and the current collector disc 10. When the width of the first sheet stock 11 is roughly twice the outer diameter of the current collector disc 10, the pre-punched region 111 can be arranged in two rows, each row of pre-punched regions 111 are arranged in the length direction X of the first sheet stock 11, and two pre-punched regions 111 are arranged in a width direction Y of the first sheet stock 11. When the first sheet stock 11 is wider, a plurality of rows of pre-punched regions 111 can be arranged according to the width of the first sheet stock 11 and the outer diameter of the current collector disc 10. Each row of pre-punched regions 111 are arranged in the length direction X of the first sheet stock 11, and the plurality of pre-punched regions 111 are arranged in the width direction Y of the first sheet stock 11.

In the punching step S10, adjacent pre-punched regions 111 may be controlled to be tangent to each other or spaced apart, and a size of the pre-punched region 111 may match a size of the current collector disc 10, so that the pre-punched region 111 may match the housing 21. In the punching step S10, it is not necessary to precisely locate the position of the pre-punched region 111 or mark the boundary position of the pre-punched region 111. It is only necessary to ensure that a positional interval between any two adjacent hole forming regions 1112 meets the spacing requirement of the two pre-punched regions 111. It can be understood that a length of a center line of the two hole forming regions 1112 is greater than or equal to the outer diameter of the current collector disc 10. In this way, one annular sheet 110 can be cut in each pre-punched region 111, thereby avoiding overlapping of cutting regions when two adjacent current collector discs 10 are subsequently cut, and ensuring that each current collector disc 10 obtained from cutting remains intact. The pre-punched regions 111 may be arranged in the length direction X of the first sheet stock 11, or may be arranged in the width direction Y of the first sheet stock 11, or may be arranged in an array on the first sheet stock 11.

When the length of the first sheet stock 11 is small and the number of the pre-punched regions 111 is small, a plurality of first holes 112 may be punched out simultaneously by a plurality of dies. When the length of the first sheet stock 11 is large and the number of the pre-punched regions 111 is large, the first holes 112 can be punched out in sequence by one or more dies to reduce the overall size of the dies. When the first holes 112 are formed sequentially, one or more first holes 112 may be formed at a time, and the process is not limited to forming the first holes 112 one by one.

By sequentially arranging the plurality of pre-punched regions 111 in the length direction X of the first sheet stock 11 and forming the first hole 112, welding and cutting positions can be controlled to be arranged sequentially, thereby facilitating processing the annular sheet 110 of a plurality of current collector discs 10.

Referring to FIG. 3 to FIG. 9, in one embodiment, in the stacking step S20, the length direction of the second sheet stock 12 is kept the same as the length direction X of the first sheet stock 11, so that the second sheet stock 12 covers each pre-punched region 111.

When the first sheet stock 11 and the second sheet stock 12 are both plate materials, the second sheet stock 12 is stacked on the first sheet stock 11, so that the thickness direction of the second sheet stock 12 is the same as the thickness direction of the first sheet stock 11, and the second sheet stock 12 and the first sheet stock 11 are on two parallel planes. The length direction of the second sheet stock 12 is the same as the length direction X of the first sheet stock 11, so that the width direction of the second sheet stock 12 is the same as the width direction Y of the first sheet stock 11, and the second sheet stock 12 and the first sheet stock 11 have a large overlapping area. When the plurality of pre-punched regions 111 are arranged in the length direction X of the first sheet stock 11, the second sheet stock 12 can cover the plurality of pre-punched regions 111 arranged in the length direction X of the first sheet stock 11, so that the connecting disc 120 corresponding to each pre-punched region 111 can be formed during cutting.

When at least one of the first sheet stock 11 and the second sheet stock 12 is a strip material, the second sheet stock 12 is stacked on the first sheet stock 11, so that the thickness direction of the second sheet stock 12 corresponding to a part of the pre-punched region 111 is the same as the thickness direction of the first sheet stock 11, and portions of the second sheet stock 12 and the first sheet stock 11 corresponding to one or more pre-punched regions 111 are on two parallel planes. The length direction of the second sheet stock 12 is the same as the length direction X of the first sheet stock 11 at least at a position corresponding to one or more pre-punched regions 111, so that the width direction of the second sheet stock 12 is the same as the width direction Y of the first sheet stock 11, and the second sheet stock 12 and the first sheet stock 11 have a large overlapping area. When the plurality of pre-punched regions 111 are arranged in the length direction X of the first sheet stock 11, the second sheet stock 12 can sequentially cover the plurality of pre-punched regions 111 arranged in the length direction X of the first sheet stock 11 in a stacking process, so that the connecting disc 120 corresponding to each pre-punched region 111 can be formed during cutting.

In one embodiment, the first sheet stock 11 and the second sheet stock 12 have the same width, so that the first sheet stock 11 and the second sheet stock 12 can be conveniently aligned. Of course, the width of the second sheet stock 12 may also be greater than the width of the first sheet stock 11 so as to cover each pre-punched region 111.

By covering each pre-punched region 111 with the second sheet stock 12, it is possible to facilitate cutting to obtain the connecting disc 120 of the plurality of current collector discs 10, thereby improving the processing efficiency of the current collector disc 10.

Referring to FIG. 3 to FIG. 10, in one embodiment, after the stacking step S20, the method further includes: compressing the first sheet stock 11 and the second sheet stock 12 so that the first sheet stock 11 and the second sheet stock 12 remain flat at a position corresponding to the pre-punched region 111.

After the first sheet stock 11 and the second sheet stock 12 are aligned, the first sheet stock 11 and the second sheet stock 12 are compressed, so that the first sheet stock 11 and the second sheet stock 12 can be in close contact with each other and remain flat. When compressing the first sheet stock 11 and the second sheet stock 12, the position corresponding to one or more pre-punched regions 111 can be compressed, and it is not necessary to compress the positions corresponding to all pre-punched regions 111 at the same time. It is only necessary to keep the first sheet stock 11 and the second sheet stock 12 corresponding to the corresponding pre-punched regions 111 compressed in the welding step.

When the first sheet stock 11 and the second sheet stock 12 are plate materials, a surface of the first sheet stock 11 and a surface of the second sheet stock 12 are in close contact with each other when the first sheet stock 11 and the second sheet stock 12 are compressed. When the first sheet stock 11 and the second sheet stock 12 are strip materials released from a roll, by compressing the first sheet stock 11 and the second sheet stock 12, the positions of the first sheet stock 11 and the second sheet stock 12 corresponding to the pre-punched region 111 can be kept flat and in close contact with each other during welding.

When the first sheet stock 11 and the second sheet stock 12 are compressed, pressure may be applied to a portion other than the pre-punched region 111. When welding and cutting the first sheet stock 11 and the second sheet stock 12 corresponding to one pre-punched region 111, the first sheet stock 11 and the second sheet stock 12 may be clamped by applying pressure to the first sheet stock 11 and the second sheet stock 12 corresponding to adjacent pre-punched regions 111.

By compressing the first sheet stock 11 and the second sheet stock 12 after stacking the first sheet stock 11 and the second sheet stock 12, the first sheet stock 11 and the second sheet stock 12 can be kept flat and in close contact with each other, so as to facilitate welding and cutting the first sheet stock 11 and the second sheet stock 12, thereby preventing the current collector disc 10 from warping after cutting.

In one embodiment, in the welding step S30, before welding the first sheet stock 11 and the second sheet stock 12, the method further includes:
recognizing a position of the first hole 112, and determining, according to the position of the first hole 112, a welding position of the first sheet stock 11 and the second sheet stock 12 in the welding region 1111.

The position of the first hole 112 can be recognized, but is not limited to, by a visual detection mechanism, such as a CCD camera. When determining the welding position, the center of the first hole 112 can be used as an origin of a coordinate system, the length direction of the first sheet stock 11 can be used as an X-axis, and the width direction of the first sheet stock 11 can be used as a Y-axis. A coordinate system is established to determine the corresponding position of the welding position in the XY axis coordinate system, and then determine the welding position and a welding trajectory to perform welding. Of course, in other embodiments, the position of the first hole 112 and the welding position may also be determined according to the position of the first sheet stock 11.

The welding position of the first sheet stock 11 and the second sheet stock 12 in the welding region 1111 refers to a welding position when the welding mark region 101 is formed on the current collector disc 10 in the welding step S30. The welding position in the welding region 1111 is determined according to the position of the first hole 112 in the same pre-punched region 111, so that the position of the welding mark region 101 in each current collector disc 10 remains consistent relative to the position of the first hole 112. This is equivalent to detecting the welding position on the first sheet stock 11 one time before each welding, which is helpful to prevent the position of the welding mark region 101 in the current collector disc 10 from being affected by the deviation of the position of the first hole 112 in the first sheet stock 11.

By determining the welding position according to the position of the first hole 112, it is possible to ensure that the welding position in each current collector disc 10 is consistent with the position of the first hole 112 thereof, thereby avoiding an influence on consistency of relative positions of the welding mark region 101 and the first hole 112 in the current collector disc 10 caused by positional deviation of the first sheet stock 11 and the second sheet stock 12.

Referring to FIG. 3 to FIG. 10, in one embodiment, the cutting step S40 further includes: forming a second hole 121 in the second sheet stock 12, and arranging the second hole 121 coaxially with the first hole 112.

The second hole 121 can be, but is not limited to, a circle, a rectangle or a regular polygon. The second hole 121 is smaller than the first hole 112. The coaxial arrangement of the second hole 121 and the first hole 112 can be understood as the center of the second hole 121 being on the axis of the first hole 112. The region corresponding to the second hole 121 is staggered from the corresponding position of the tab, which can facilitate welding of the tab and the connecting disc 120.

By using the second hole 121, it allows an electrolyte to circulate on both sides of the connecting disc 120, thereby preventing the situation that the connecting disc 120 blocks flow of the electrolyte to the side away from the tab after the current collector disc 10 is welded to the housing 21 and the tab.

Referring to FIG. 3 to FIG. 10, in one embodiment, in the cutting step S40, before cutting the first sheet stock 11 and the second sheet stock 12, the method also includes: identifying a position of the first hole 112, and determining, according to the position of the first hole 112, a position of an edge of the pre-punched region 111 and a position in the second sheet stock 12 for forming the second hole 121.

The position of the first hole 112 can be recognized, but is not limited to, by a visual detection mechanism, such as a CCD camera. When the positions of the first sheet stock 11 and the second sheet stock 12 remain unchanged in the welding step S30 and the cutting step S40, the cutting position in the cutting step S40 may be determined according to the position of the first hole 112 recognized in the welding step S30. When determining the cutting position, the center of the first hole 112 may be used as an origin of a coordinate system, and a cutting circumference trajectory may be determined according to the radius of the current collector disc 10 to perform cutting. Of course, in other embodiments, the first hole 112 and the cutting position can also be determined according to the position of the first sheet stock 11.

The position of the edge of the pre-punched region 111 (coaxial with the periphery of the welding region 1111) is a boundary position of cutting to form the current collector disc 10. The position of the edge of the pre-punched region 111 is determined according to the position of the first hole 112 in the current collector disc 10, so that the edge of each current collector disc 10 remains consistent relative to the position of the first hole 112. This is equivalent to detecting the cutting position on the first sheet stock 11 one time before each cutting, which is beneficial to preventing relative positions of an edge of the current collector disc 10 and the first hole 112 from being affected by the deviation of the position of the first hole 112 in the first sheet stock 11.

The position in the second sheet stock 12 for forming the second hole 121 is namely a position on the second sheet stock 12 corresponding to a position where the second hole 121 is formed.

By determining, according to the position of the first hole 112, the position of the second hole 121 and a cutting position corresponding to a periphery of the current collector disc 10, the first hole 112 and the second hole 121 in the current collector disc 10 can be kept consistent with a relative position of the periphery of the current collector disc 10, thereby improving the consistency and symmetry of the current collector disc 10.

Referring to FIG. 3 to FIG. 10, in one embodiment, in the welding step S30, the first sheet stock 11 and the second sheet stock 12 are welded by using one welding method of laser welding, penetration welding, resistance welding, thermal compounding or friction welding.

In the welding step S30, surface-to-surface fusion welding between the first sheet stock 11 and the second sheet stock 12 can be achieved by means of laser welding, penetration welding, resistance welding, thermal compounding or friction welding, forming a larger welding mark region 101. In one embodiment, in the welding step S30, the first sheet stock 11 and the second sheet stock 12 are welded by laser to form the welding mark region 101. When laser welding is used, the energy intensity, width and trajectory can be controlled to facilitate the control of the position and width of the welding mark region 101, which helps to reduce the deformation on both sides of the current collector disc 10. Laser welding has high consistency, a high speed and a mature technology.

By adopting the above welding method, the first sheet stock 11 and the second sheet stock 12 can be welded together, ensuring that the first sheet stock 11 and the second sheet stock 12 are firmly welded.

Referring to FIG. 3 to FIG. 10, in one embodiment, after the cutting step S40, the method further includes:
removing burr on an edge of the current collector disc 10.

Deburring can be done by hand polishing or mechanical polishing, such as polishing, milling, laser cleaning, etc., to remove sharp corners or burr on the edge of the current collector disc 10, so that edges of the annular sheet 110 and the connecting disc 120 are more rounded and the surface is smoother. When welding the tab and the housing 21, keeping the surface of the current collector disc 10 smooth can improve the welding quality.

By polishing the current collector disc 10, the edge of the current collector disc 10 can be kept smooth, thereby preventing the current collector disc 10 from scratching other current collector discs 10 or the housing 21 during production and assembly, and facilitating subsequent assembly.

Referring to FIG. 3 to FIG. 10, in one embodiment, a circumference of the welding mark region 101 is coaxially arranged with the first hole 112; and/or a peripheral edge of the current collector disc 10 is coaxially arranged with the first hole 112.

The circumference of the welding mark region 101 can be understood as a circumference of an inscribed circle of the welding mark region 101. A width of the welding mark region 101 in a radial direction of the current collector disc 10 can be ignored. The welding mark region 101 can be understood as a curve surrounding the first hole 112.

The periphery of the current collector disc 10 refers to a circumference formed on the current collector disc 10 when the first sheet stock 11 and the second sheet stock 12 are cut to form the current collector disc 10.

The circumference of the welding mark region 101 is coaxial with the first hole 112, which can improve the symmetry of the welding mark region 101 on the current collector disc 10. After welding with the tab and the housing 21, the resistance distribution of the current collector disc 10 in each direction can be uniform; the first hole 112 is coaxial with the periphery of the current collector disc 10, which can improve the symmetry of the current collector disc 10 and facilitate the alignment welding of the current collector disc 10 with the tab and the housing 21.

Referring to FIG. 3 to FIG. 10, in one embodiment, the welding mark region 101 includes a plurality of welding sections 1011.

A number of the welding sections 1011 may be 2, 3, 6, 8, etc. The plurality of welding sections 1011 may be, but are not limited to, in the same shape. The welding section 1011 may be in the shape of an arc, a circle, an ellipse, a rectangle, or other shapes, and there may be a certain interval between adjacent welding sections 1011. The plurality of welding sections 1011 are arranged around the first hole 112, and spacing between the welding sections 1011 may vary. Different welding sections 1011 may be formed by welding simultaneously or by welding in multiple times.

The welding mark region 101 is formed by the plurality of welding sections 1011, which can avoid unevenness of both surfaces of the current collector disc 10 after welding caused by high heat input during welding of the first sheet stock 11 and the second sheet stock 12.

Referring to FIG. 3 to FIG. 10, in one embodiment, the plurality of welding sections 1011 are arranged in an annular array; and/or,
the welding section 1011 is arc-shaped, and a central angle β, corresponding to the first hole 112, of the welding section 1011 is 30 degrees to 120 degrees; and/or,
a central angle α, corresponding to the first hole 112, of a gap between every two adjacent welding sections 1011 is 5 degrees to 60 degrees; and/or,
a ratio of a width of the welding section 1011 to a width of the annular sheet 110 is 0.2 to 0.9.

The plurality of welding sections 1011 are arranged in the annular array, such as a multi-dot annular array or a multi-arc segment annular array. On the one hand, the shapes of the welding sections 1011 are roughly the same, and on the other hand, the distances between adjacent welding sections 1011 are roughly the same, so that the formed welding mark region 101 has a high degree of symmetry.

In one embodiment, in the welding step S30, the plurality of welding sections 1011 can be formed by welding the first sheet stock 11 and the second sheet stock 12 around the first hole 112, and welding parameters of each welding section 1011 are kept consistent, so that the energy input of each welding section 1011 is controlled to be consistent.

β can be 40 degrees, 60 degrees, 80 degrees or 100 degrees. The welding section 1011 is arc-shaped, which means that when a radial dimension of the welding section 1011 along the current collector disc 10 is not considered, the welding section 1011 can be regarded as a smoothly curved curve, such as an arc with the center of the first hole 112 as a circle center. The central angle β of the welding section 1011 corresponding to the first hole 112 refers to an angle formed by two radial line segments at a side close to the welding section 1011, and the two radial line segments are formed by taking a midpoint of the first hole 112 as a circle center and connecting the circle center and two ends of the welding section 1011.

α can be 10 degrees, 20 degrees, 30 degrees, 40 degrees or 50 degrees. The gap between two adjacent welding sections 1011 refers to a region spacing ends of two adjacent welding sections 1011, and a corresponding central angle α thereof refers to an angle formed by two radial line segments at a side close to the welding section 1011, and the two radial line segments are formed by taking a midpoint of the first hole 112 as a circle center and connecting the circle center and ends, close to each other, of two adjacent welding sections 1011.

The ratio of the width of the welding section 1011 to the width of the annular sheet 110 can be 0.3, 0.5, 0.7 or 0.8. The width of the welding section 1011 refers to the radial dimension of the welding section 1011 in the radial direction of the current collector disc 10. The width of each position of the welding section 1011 can be different.

Arranging the welding sections 1011 in the annular array can improve the symmetry of the welding mark region 101 and can make the heat input during welding more evenly distributed, making it convenient to control the two sides of the current collector disc 10 to remain flat after welding. Controlling the length range of the welding section 1011 can, on the one hand, ensure the length of each welding section 1011 so as to reduce the number of welding times and ensure welding efficiency, and can, on the other hand, prevent the case where the welding section 1011 is too long, consequently affecting the heat input during welding and causing unevenness on both sides of the current collector disc 10 after welding. The spacing between adjacent welding sections 1011 is controlled, the resistance between the annular sheet 110 and the connecting disc 120 is controlled, and the heat during welding is dispersed to prevent the current collector disc 10 from being deformed after welding. Controlling the width of the welding section 1011 can improve the stability of the connection between the annular sheet 110 and the connecting disc 120 and help reduce the resistance.

Referring to FIG. 3 to FIG. 10. In one embodiment, the first sheet stock 11 is a strip material; and/or the second sheet stock 12 is a strip material.

The strip material refers to a material whose length is much greater than a width thereof and whose width is much greater than a thickness thereof, for example, the length is greater than or equal to 4 times, 5 times or 7 times the width thereof. The strip material can be wound into a coil or flattened into a long strip. When the current collector disc 10 is produced by automation equipment, the strip material can be allowed to be provided with a plurality of pre-punched regions 111, and the strip material can be transported by a transport mechanism so that the strip material passes through various processing positions in sequence.

The first sheet stock 11 is a strip material, and the pre-punched region 111 can be continuously arranged on the first sheet stock 11, thereby reducing the change frequency of the first sheet stock 11, and facilitating the continuous production of the current collector disc 10. The second sheet stock 12 is a strip material, which can be continuously stacked, welded and cut with the first sheet stock 11, thereby reducing the change frequency of the second sheet stock 12, and facilitating the continuous production of the current collector disc 10.

Referring to FIG. 3 to FIG. 10, in one embodiment, a material of the first sheet stock 11 is the same as that of the housing 21; and/or a material of the second sheet stock 12 is the same as that of the tab.

The housing 21 and the first sheet stock 11 can be made of one of the metals or alloys such as steel, nickel, aluminum or copper. The first sheet stock 11 and the housing 21 are made of the same material. When the annular sheet 110 is welded to the housing 21, the welding quality of the same material can more easily ensure the welding quality of the current collector disc 10 and the housing 21; the tab and the second sheet stock 12 can be made of another of the metals or alloys such as steel, nickel, aluminum or copper. The tab and the housing 21 are made of different materials, and the second sheet stock 12 and the tab are made of the same material. When the connecting disc 120 is welded to the tab, the welding quality of the same material can more easily ensure the welding quality of the current collector disc 10 and the tab.

By adopting the first sheet stock 11 having the same material as the housing 21, the annular sheet 110 and the housing 21 can be made of the same material, which facilitates welding the housing 21 and the annular sheet 110 and improves the stability of welding the annular sheet 110 and the housing 21; by adopting the second sheet stock 12 having the same material as the tab, the connecting disc 120 and the tab can be made of the same material, thereby facilitating welding the tab and the connecting disc 120 and improving the stability of welding the connecting disc 120 and the tab.

Referring to FIG. 3 to FIG. 10, an embodiment of the present application further provides a current collector disc 10, the current collector disc 10 includes an annular sheet 110 configured to connect to a housing 21 and a connecting disc 120 configured to connect to a tab, where a welding mark region 101 is formed between the annular sheet 110 and the connecting disc 120, and a first hole 112 is formed in a middle of the annular sheet 110; by cutting the first sheet stock 11 and the second sheet stock 12 which are stacked and connected by welding, the annular sheet 110 is formed by a part cut from the first sheet stock 11, the connecting disc 120 is formed by a part cut from the second sheet stock 12, the welding mark region 101 is formed by a welding portion of the first sheet stock 11 and the second sheet stock 12, and peripheral edges of the annular sheet 110 and the connecting disc 120 are aligned.

The current collector disc 10 may be, but is not limited to, a negative electrode current collector disc. The current collector disc 10 may be an accessory prepared by the above current collector disc processing method, or may be a component produced at a certain stage in an assembly line for producing the battery cell 20.

The first sheet stock 11 and the second sheet stock 12 that are stacked and connected by welding are cut, and after the second sheet stock 12 and the first sheet stock 11 having the first hole 112 are stacked, the first sheet stock 11 and the second sheet stock 12 are welded around the first hole 112. After the first sheet stock 11 and the second sheet stock 12 are welded and fixed, the first sheet stock 11 and the second sheet stock 12 are cut. When the annular sheet 110 and the connecting disc 120 are formed by cutting, the peripheral edges of the annular sheet 110 and the connecting disc 120 are kept aligned. The current collector disc 10 in this embodiment can be manufactured by using the current collector disc processing method in any of the above embodiments.

By adopting the current collector disc processing method in the above embodiment, the peripheral edges of the annular sheet 110 and the connecting disc 120 in the current collector disc can be aligned, so that the structure of the current collector disc 10 is simplified, assembly and alignment of the current collector disc 10 are facilitated, and the production and assembly efficiency of the current collector disc 10 is improved, which helps to improve the consistency of the battery cell 20.

Referring to FIG. 3 to FIG. 10, in one embodiment, a second hole 121 for circulation of an electrolyte is formed in the connecting disc 120, and an area of the second hole 121 is smaller than that of the first hole 112.

In one embodiment, the first hole 112 and the second hole 121 are circular holes, an outer diameter of the second hole 121 is smaller than an outer diameter of the first hole 112, and the second hole 121 and the first hole 112 are coaxially arranged. An annular region exists between the first hole 112 and the second hole 121 of the connecting disc 120, and the tab is welded to the annular region.

By forming the second hole 121, circulation of the electrolyte can be facilitated; by controlling the area of the second hole 121 to be less than that of the first hole 112, a certain region can be reserved for welding the tab in the connecting disc 120 corresponding to a position inside the first hole 112, so as to facilitate welding of the connecting disc 120 and the tab.

Referring to FIG. 3 to FIG. 10, in one embodiment, a material of the annular sheet 110 is the same as that of the housing 21; and/or, a material of the connecting disc 120 is the same as that of the tab.

The housing 21 and the annular sheet 110 can be made of one of the metals or alloys such as steel, nickel, aluminum or copper. The annular sheet 110 and the housing 21 are made of the same material. When the annular sheet 110 is welded to the housing 21, the welding quality of the same material can more easily ensure the welding quality of the current collector disc 10 and the housing 21; the tab and the connecting disc 120 can be made of another of the metals or alloys such as steel, nickel, aluminum or copper. The tab and the housing 21 are made of different materials, and the connecting disc 120 and the tab are made of the same material. When the connecting disc 120 is welded to the tab, the welding quality of the same material can more easily ensure the welding quality of the current collector disc 10 and the tab.

By using the annular sheet 110 made of the same material as the housing 21, welding of the housing 21 and the annular sheet 110 can be facilitated, and the stability of the welding between the annular sheet 110 and the housing 21 can be improved; by using the connecting disc 120 made of the same material as the tab, welding of the tab and the connecting disc 120 can be facilitated, and the stability of the welding between the connecting disc 120 and the tab can be improved.

An embodiment of the present application further provides a battery cell 20, the battery cell 20 includes an electrode assembly 22 and a housing 21, where the electrode assembly 22 is provided with a positive electrode tab 222 and a negative electrode tab 221, and further includes the current collector disc 10 in any of the above embodiments, where the negative electrode tab 221 is placed in the first hole 112 and connected to the connecting disc 120 by welding, and the housing 21 is connected to the annular sheet 110 by welding; alternatively, the positive electrode tab 222 is placed in the first hole 112 and connected to the connecting disc 120 by welding, and the housing 21 is connected to the annular sheet 110 by welding.

The housing 21 is connected to the side of the annular sheet 110 away from the connecting disc 120 by welding, which can thus increase the welding surface, improve the welding quality, and reduce the resistance of the welding part.

The electrode assembly 22 may be, but is not limited to, cylindrical, and the electrode assembly 22 may be, but is not limited to, being formed by winding a positive electrode plate, a negative electrode plate, and a separator. The positive electrode tab 222 and the negative electrode tab 221 may be respectively arranged at two ends of the electrode assembly 22. The battery cell 20 may further include a top cover 23, and the top cover 23 is mounted on an end of the housing 21 away from the current collector disc 10.

By adopting the current collector disc 10 in the above embodiment, when the connecting disc 120 is connected to the negative electrode tab 221, it is convenient to weld the current collector disc 10 with the negative electrode tab 221 and the housing 21. When the connecting disc 120 is connected to the positive electrode tab 222, it is convenient to weld the current collector disc 10 with the positive electrode tab 222 and the housing 21, which helps to improve the consistency of the battery cell 20, makes the assembly of the current collector disc 10 more convenient, and is conducive to improving the production efficiency of the battery cell 20.

An embodiment of the present application further provides an electrical apparatus, including the battery cell 20 according to any one of the above embodiments.

The number of the battery cell 20 may be one or more. When the number of the battery cell 20 is plural, the battery cells may be electrically connected to form a battery pack or a battery group.

By adopting the battery cell 20 in the above embodiment, it is helpful to improve the stability of operation of the electrical apparatus and reduce the costs and production efficiency of the electrical apparatus.

Referring to FIG. 3 to FIG. 9, an embodiment of the present application provides a current collector disc processing method. The current collector disc processing method is performed by forming a first hole 112 in a first sheet stock 11, overlapping a second sheet stock 12 with the first sheet stock 11, and then performing welding and cutting to form a current collector disc 10, so that edges of an annular sheet 110 and a connecting disc 120 in the current collector disc 10 after cutting can be aligned, which is beneficial to simplifying the processing process of the current collector disc 10 and improving the consistency of the current collector disc 10.

The foregoing description illustrates merely preferred embodiments of the present application, but is not intended to limit present application. Any modification, equivalent substitution, or improvement made within the spirit and principle of present application shall fall within the protection scope of the present application.

## Claims

1. A current collector disc processing method, comprising the following steps:
a punching step of providing a first sheet stock, wherein the first sheet stock comprises a pre-punched region, the pre-punched region is divided into a hole forming region and a welding region surrounding the hole forming region, and a first hole for a tab to be placed in cooperation is formed in the hole forming region;
a stacking step of providing a second sheet stock, and stacking the second sheet stock with the first sheet stock so that the second sheet stock covers the pre-punched region;
a welding step of welding the first sheet stock and the second sheet stock in the welding region; and
a cutting step of cutting the first sheet stock and the second sheet stock along an edge of the pre-punched region to obtain a current collector disc;
wherein in the current collector disc, a part formed by cutting the first sheet stock is an annular sheet, the annular sheet is configured to connect to a housing, a part formed by cutting the second sheet stock is a connecting disc, the connecting disc is configured to connect to the tab, and a position where the connecting disc and the annular sheet are connected by welding forms a welding mark region.

2. The current collector disc processing method according to claim 1, wherein in the punching step, a plurality of pre-punched regions are sequentially arranged in a length direction of the first sheet stock, and the first hole is formed in the hole forming region of each pre-punched region.

3. The current collector disc processing method according to claim 2, wherein in the stacking step, a length direction of the second sheet stock is kept the same as the length direction of the first sheet stock, so that the second sheet stock covers each pre-punched region.

4. The current collector disc processing method according to any one of claims 1 to 3, wherein after the stacking step, the method further comprises: compressing the first sheet stock and the second sheet stock, so that the first sheet stock and the second sheet stock remain flat at a position corresponding to the pre-punched region.

5. The current collector disc processing method according to any one of claims 1 to, wherein in the welding step, before welding the first sheet stock and the second sheet stock, the method further comprises:
recognizing a position of the first hole, and determining, according to the position of the first hole, a welding position of the first sheet stock and the second sheet stock in the welding region.

6. The current collector disc processing method according to any one of claims 1 to 5, wherein the cutting step further comprises: forming a second hole in the second sheet stock, and arranging the second hole coaxially with the first hole.

7. The current collector disc processing method according to claim 6, wherein in the cutting step, before cutting the first sheet stock and the second sheet stock, the method further comprises:
recognizing a position of the first hole, and determining, according to the position of the first hole, a position of an edge of the pre-punched region and a position in the second sheet stock for forming the second hole.

8. The current collector disc processing method according to any one of claims 1 to 7, wherein in the welding step, the first sheet stock and the second sheet stock are welded by using one welding method of laser welding, penetration welding, resistance welding, thermal compounding or friction welding.

9. The current collector disc processing method according to any one of claims 1 to 8, wherein after the cutting step, the method further comprises:
removing burr on an edge of the current collector disc.

10. The current collector disc processing method according to any one of claims 1 to 9, wherein a circumference of the welding mark region is coaxially arranged with the first hole; and/or a peripheral edge of the current collector disc is coaxially arranged with the first hole.

11. The current collector disc processing method according to any one of claims 1 to 10, wherein the welding mark region comprises a plurality of welding sections.

12. The current collector disc processing method according to claim 11, wherein the plurality of welding sections are arranged in an annular array; and/or,
the welding section is arc-shaped, and a central angle, corresponding to the first hole, of the welding section is 30 degrees to 120 degrees; and/or,
a central angle, corresponding to the first hole, of a gap between every two adjacent welding sections is 5 degrees to 60 degrees; and/or,
a ratio of a width of the welding section to a width of the annular sheet is 0.2 to 0.9.

13. The current collector disc processing method according to any one of claims 1 to 12, wherein the first sheet stock is a strip material; and/or the second sheet stock is a strip material.

14. The current collector disc processing method according to any one of claims 1 to 13, wherein a material of the first sheet stock is the same as that of the housing; and/or,
a material of the second sheet stock is the same as that of the tab.

15. A current collector disc, comprising an annular sheet configured to connect to a housing and a connecting disc configured to connect to a tab, wherein a welding mark region is formed between the annular sheet and the connecting disc, and a first hole is formed in a middle of the annular sheet; by cutting a first sheet stock and a second sheet stock which are stacked and connected by welding, the annular sheet is formed by a part cut from the first sheet stock, the connecting disc is formed by a part cut from the second sheet stock, the welding mark region is formed by a welding portion of the first sheet stock and the second sheet stock, and peripheral edges of the annular sheet and the connecting disc are aligned.

16. The current collector disc according to claim 15, wherein a second hole for circulation of an electrolyte is formed in the connecting disc, and an area of the second hole is smaller than that of the first hole.

17. The current collector disc according to claim 15 or 16, wherein a material of the annular sheet is the same as that of the housing; and/or,
a material of the connecting disc is the same as that of the tab.

18. A battery cell, comprising an electrode assembly and a housing, wherein the electrode assembly is provided with a positive electrode tab and a negative electrode tab, and further comprising the current collector disc according to any one of claims 15 to 17, wherein the negative electrode tab or the positive electrode tab is placed in the first hole and connected to the connecting disc by welding, and the housing is connected to the annular sheet by welding.

19. An electrical apparatus, comprising the battery cell according to claim 18.
